# FASCICULE DE BREVET EUROPEEN

(11) **EP 1 067 030 B1**
(45) Date de publication et mention de la délivrance du brevet: **02.03.2005**
(21) Numéro de dépôt: 00401946.9
(22) Date de dépôt: 06.07.2000
(51) Int. Cl.: B60S 1/48, G01F 23/38

(54) **Ensemble de pompe pour pomper un liquide tel qu'un liquide lave-glace ou lave-projecteur hors d'un réservoir**
Aggregat zum Fördern von Flüssigkeit, wie Waschflüssigkeit für Windschutzscheiben bzw. Scheinwerfer, aus einem Vorratstank
Assembly for pumping a liquid, such as windscreen washer or headlamp washer liquid, out of a reservoir

(30) Priorité: 07.07.1999 FR 9908789
(43) Date de publication de la demande: 10.01.2001
(73) Titulaire: Renault s.a.s., 92100 Boulogne Billancourt (FR)
(72) Inventeur: Gueguen, Alain, 92000 Nanterre (FR); Guillaumin, Jean Pierre, 92150 Suresnes (FR); Kerihuel, Hervé, 92500 Rueil Malmaison (FR); Mulato, Gilles, 92320 Chatillon s/Bagneux (FR)

(56) Documents cités:
- DE-A- 3 730 006
- DE-A- 4 112 539
- DE-A- 4 304 634
- DE-U- 9 103 554

## Description

La présente invention est relative à un ensemble de pompe pour pomper un liquide tel qu'un liquide lave-glace ou lave-projecteur hors d'un réservoir, particulièrement destiné à équiper des véhicules automobiles.

On connaît de la technique antérieure des ensembles de pompe du type susmentionné, comprenant une prise d'aspiration dudit liquide et une jauge à flotteur pour détecter le niveau dudit liquide dans ledit réservoir.

Classiquement, la prise d'aspiration du liquide et la jauge à flotteur forment des organes séparés qu'il convient de monter en des endroits distincts du réservoir, puis de brancher individuellement. On connaît par DE-A-4 125 39 une pompe à liquide comportant un capteur de niveau du type défini par le préambule de la revendication 1

La présente invention a pour but principal de fournir un ensemble de pompe permettant de regrouper ces opérations de montage distinctes et réalisé conformément à la revendication 1.

On atteint ce but de l'invention avec un ensemble de pompe pour pomper un liquide tel qu'un liquide lave-glace ou lave-projecteur hors d'un réservoir, comprenant une prise d'aspiration dudit liquide et une jauge à flotteur pour détecter le niveau dudit liquide dans ledit réservoir, remarquable en ce que ladite prise d'aspiration et ledit flotteur sont regroupés dans une même région de l'espace, de manière à pouvoir être fixés sur ledit réservoir dans une seule et même ouverture.

Grâce à ces caractéristiques, on obtient un ensemble de pompe dont la prise d'aspiration et la jauge à flotteur forment une unité suffisamment compacte pour pouvoir être montée dans une seule ouverture sur le réservoir, ce qui permet de gagner du temps lors du montage.

Par ailleurs, la présence d'une seule ouverture au lieu de deux dans la technique antérieure permet de réduire les risques de fuites.

Suivant d'autres caractéristiques de l'ensemble de pompe suivant l'invention:
- ledit flotteur est monté coulissant sur ladite prise d'aspiration, une tige s'étendant sensiblement suivant la direction de déplacement dudit flotteur étant fixée sur ce dernier et comportant, à son extrémité, des moyens susceptibles de solliciter un capteur fixé sur ledit ensemble,
- cet ensemble de pompe comprend une chambre s'étendant suivant une direction sensiblement parallèle à ladite prise d'aspiration et contenant un capteur, des moyens susceptibles de solliciter ce capteur étant fixés sur ledit flotteur,
- ledit flotteur est monté coulissant à la fois sur ladite chambre et sur ladite prise d'aspiration,
- ledit flotteur est monté rotatif sur ladite chambre,
- ladite chambre et ladite prise d'aspiration sont coudées,
- ladite chambre et ladite prise d'aspiration sont disjointes,
- ladite chambre et ladite prise d'aspiration sont jointives,
- ledit capteur comprend une ampoule Reed, et lesdits moyens pour solliciter ce capteur comprennent un aimant.

D'autres caractéristiques et avantages de la présente invention apparaîtront à la lecture de la description qui va suivre et à l'examen du dessin annexé, dans lequel:
- la figure 1 représente une vue en coupe axiale d'un mode de réalisation préféré de l'ensemble de pompe selon l'invention,
- la figure 2 représente une vue de dessous de ce mode de réalisation, et
- les figures 3 à 5 représentent des vues en coupe axiale d'autres modes de réalisation de l'ensemble de pompe selon l'invention.

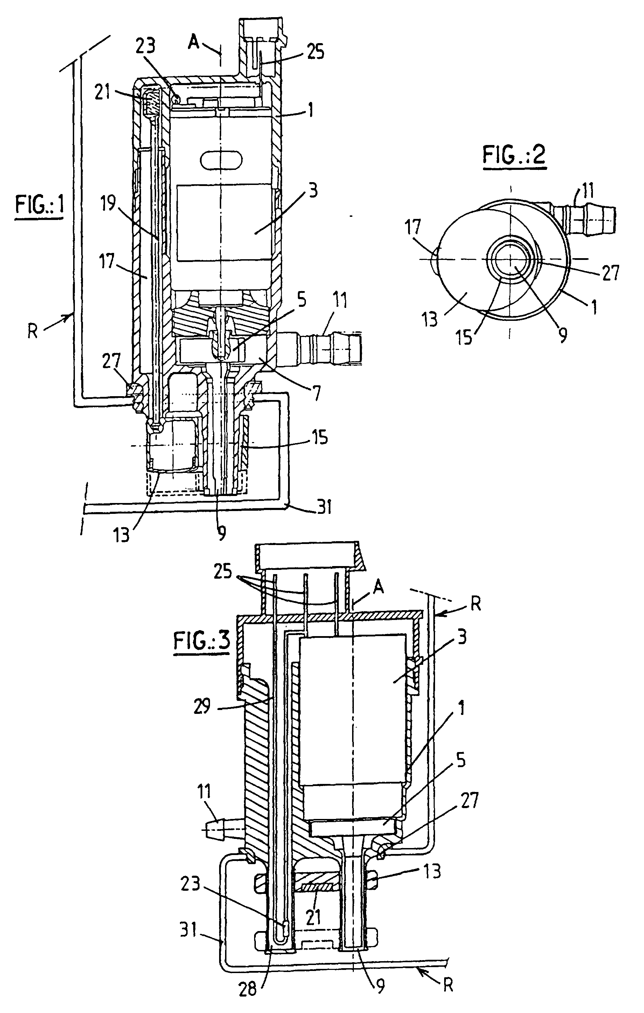

On se reporte à présent à la figure 1, sur laquelle on voit que l'ensemble de pompe selon l'invention comprend un corps 1 dans lequel se trouve un moteur électrique 3 sur l'arbre duquel est fixée une turbine 5 susceptible de tourner dans une chambre d'aspiration 7.

Cette chambre d'aspiration communique d'une part avec une prise d'aspiration 9 de forme allongée s'étendant sensiblement suivant la direction de l'axe A du moteur électrique 3, et d'autre part avec une prise de sortie 11 s'étendant suivant une direction sensiblement perpendiculaire à l'axe A.

Un flotteur 13 de forme par exemple circulaire, muni d'un orifice 15 dont le diamètre correspond au diamètre extérieur de la prise d'aspiration 9 à un léger jeu près, est monté coulissant sur cette prise d'aspiration.

Le corps 1 comprend, à sa périphérie, une cavité 17 s'étendant selon une direction sensiblement parallèle à l'axe A.

Cette cavité contient une tige 19 dont une extrémité est fixée sur le flotteur 13 et dont l'autre extrémité comporte un aimant 21 susceptible de solliciter une ampoule Reed 23 fixée par exemple sur la partie supérieure du moteur électrique 3.

On rappelle ici qu'une ampoule Reed comprend classiquement une enveloppe en verre à l'intérieur de laquelle se trouvent deux languettes métalliques susceptibles d'entrer en contact l'une avec l'autre sous l'effet d'un champ magnétique. Une telle ampoule joue donc le rôle d'un interrupteur à commande magnétique.

L'ensemble de pompe selon l'invention comprend par ailleurs des organes de branchement 25 connectés d'une part au moteur électrique 3, et d'autre part à l'ampoule Reed 23.

Cet ensemble comprend également un joint d'étanchéité 27 placé à la périphérie du corps 1, au-dessus (en prenant comme références le haut et le bas de la feuille) de la prise d'aspiration 9 et du flotteur 13.

Le corps 1, la prise d'aspiration 9, la prise de sortie 11 et la cavité 17 peuvent être réalisés en matière plastique d'un seul bloc par moulage.

Le flotteur 13 et la tige 19 seront également de préférence réalisés en matière plastique.

On se reporte à présent aux figures 3 à 5, sur lesquelles on a représenté d'autres modes de réalisation possibles de l'ensemble de pompe selon l'invention.

Sur ces figures, des références numériques identiques à celles utilisées pour les figures 1 et 2 indiquent des organes ou ensembles d'organes identiques ou analogues.

On se bornera dans ce qui suit à indiquer les caractéristiques qui différencient les modes de réalisation les uns des autres.

Dans le mode de réalisation de la figure 3, le corps 1 définit une chambre 28 de forme allongée, disjointe de la prise d'aspiration 9, s'étendant jusqu'à l'extrémité de cette dernière, suivant une direction sensiblement parallèle à celle-ci.

Une ampoule Reed 23 est placée au fond de la chambre 28, c'est-à-dire près de son extrémité. Cette ampoule est reliée aux organes de branchement 25 par un élément conducteur 29 s'étendant sur toute la longueur de la chambre 28.

Un flotteur 13 muni d'un aimant 21 susceptible de solliciter l'ampoule 23 est monté coulissant à la fois sur la chambre 28 et sur la prise d'aspiration 9.

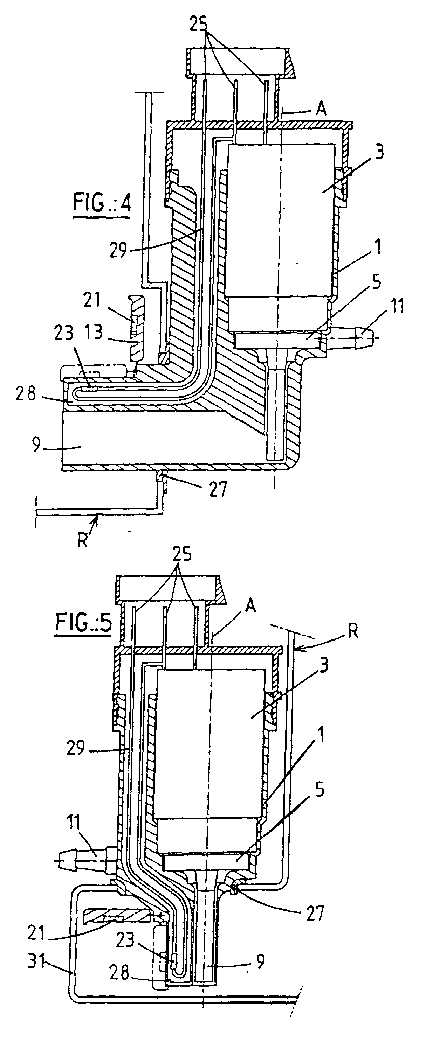

Dans le mode de réalisation de la figure 4, la chambre 28 et la prise d'aspiration 9 sont jointives et coudées.

Un flotteur 13 muni d'un aimant susceptible de solliciter l'ampoule 23 est monté rotatif à la périphérie de la chambre 28.

Le mode de réalisation de la figure 5 se différencie du précédent en ce que la chambre 28 et la prise d'aspiration 9 ne sont pas coudées.

Le mode d'utilisation et les avantages de l'ensemble de pompe selon l'invention résultent directement de la description qui précède.

Cet ensemble de pompe est destiné à être monté sur un réservoir R (voir figures 1, 3, 4 et 5) pouvant être rempli, par exemple, par du liquide lave-glace destiné à laver les baies d'un véhicule automobile.

Seule la partie de cet ensemble située sous le joint d'étanchéité 27 est destinée à être positionnée à l'intérieur du réservoir R.

Ce positionnement a lieu dans une zone de ce réservoir qui est située à proximité du fond de celui-ci, par exemple sur un appendice 31 comme cela est représenté sur les figures ci-jointes.

Lors d'une mise en route du moteur électrique 3 grâce à un courant électrique transmis par les organes de branchement 25, la turbine 5 se met à tourner, ce qui a pour effet d'aspirer le liquide contenu dans le réservoir R par la prise d'aspiration 9, et de refouler ce liquide par la prise de sortie 11.

Dans le cas du mode de réalisation des figures 1 et 2, tant que le niveau de liquide dans le réservoir R est suffisant, le flotteur 13 est maintenu dans la position haute représentée en trait plein, et l'aimant 21 est maintenu face à l'ampoule Reed 23 par l'intermédiaire de la tige 19. Cette ampoule joue alors le rôle d'un interrupteur fermé.

Lorsque qu'il ne reste plus qu'un peu de liquide dans le réservoir R et que son niveau continue de baisser, le flotteur 13 descend jusqu'à une position représentée en trait discontinu où le champ magnétique de l'aimant 21 devient insuffisant pour solliciter l'ampoule Reed 23.

A ce moment là, l'ampoule Reed joue le rôle d'un interrupteur ouvert, susceptible de déclencher un voyant (non représenté) placé par exemple sur le tableau de bord d'un véhicule automobile, indiquant que le niveau de liquide dans le réservoir R est devenu insuffisant.

Dans le cas des modes de réalisation des figures 3 à 5, l'aimant 21 situé sur le flotteur 13 est distant de l'ampoule Reed 23 tant que le niveau de liquide dans le réservoir R est suffisant. Cet aimant se rapproche de cette ampoule lors du coulissement ou de la rotation du flotteur 13 sous l'effet de l'abaissement du niveau de liquide.

Dans ce cas, il faut donc prévoir que le voyant indicateur du niveau de liquide soit déclenché à partir du moment où l'ampoule Reed joue le rôle d'un interrupteur fermé.

Tous les modes de réalisation envisagés ci-dessus ont ceci de commun que la prise d'aspiration 9 et le flotteur 13 sont proches l'un de l'autre ou, en d'autres termes, que ces deux organes sont regroupés dans une même région de l'espace.

On peut de la sorte monter l'ensemble de pompe selon l'invention en n'utilisant qu'une seule ouverture sur le réservoir R.

Outre le fait que l'on peut ainsi réduire le nombre d'opérations de montage par rapport à la technique antérieure, on limite les risques de fuite puisqu'une seule ouverture sur le réservoir R est nécessaire.

On notera en outre que le fait de rapprocher la prise d'aspiration 9 et le flotteur 13 permet d'obtenir un ensemble de pompe très peu encombrant.

On notera également que l'ensemble de pompe selon l'invention peut s'adapter aisément sur la plupart des réservoirs existants, moyennant des modifications mineures.

On marquera une préférence pour le premier mode de réalisation, dans lequel l'ampoule Reed 23 est placée à proximité des organes de branchement 25, ce qui permet de s'affranchir de l'élément conducteur 29.

Bien entendu, la présente invention n'est pas limitée au mode de réalisation décrit et représenté, fourni à titre d'exemple illustratif et non limitatif.

C'est ainsi par exemple que l'on pourrait remplacer le couple ampoule Reed/aimant par tout autre couple de capteur/moyen pour solliciter ce capteur, tel qu'une cellule photoélectrique frappée par un faisceau lumineux.

## Revendications

1. Ensemble de pompe pour pomper un liquide tel qu'un liquide lave-glace ou lave-projecteur hors d'un réservoir (R), comprenant une prise d'aspiration (9) dudit liquide et une jauge à flotteur (13) comprenant un capteur (23) pour détecter le niveau dudit liquide dans ledit réservoir (R), ladite prise d'aspiration (9) et ledit flotteur (13) étant regroupés dans une même région de l'espace, dans le réservoir **caractérisé en ce que** ledit capteur (23) est situé à l'intérieur du volume défini par ledit ensemble de pompe.

2. Ensemble de pompe selon la revendication 1, **caractérisé en ce que** ledit flotteur (13) est monté coulissant sur ladite prise d'aspiration (9), une tige (19) s'étendant sensiblement suivant la direction de déplacement dudit flotteur étant fixée sur ce dernier et comportant, à son extrémité, des moyens (21) susceptibles de solliciter ledit capteur (23).

3. Ensemble de pompe selon la revendication 1, **caractérisé en ce qu'**il comprend une chambre (28) s'étendant suivant une direction sensiblement parallèle à ladite prise d'aspiration (9) et contenant ledit capteur (23), des moyens (21) susceptibles de solliciter ce capteur (23) étant fixés sur ledit flotteur (13).

4. Ensemble de pompe selon la revendication 3, **caractérisé en ce que** ledit flotteur (13) est monté coulissant à la fois sur ladite chambre (28) et sur ladite prise d'aspiration (9).

5. Ensemble de pompe selon la revendication 3, **caractérisé en ce que** ledit flotteur (13) est monté rotatif sur ladite chambre (28).

6. Ensemble de pompe selon la revendication 5, **caractérisé en ce que** ladite chambre (28) et ladite prise d'aspiration (9) sont coudées.

7. Ensemble de pompe selon l'une quelconque des revendications 3 à 5, **caractérisé en ce que** ladite chambre (28) et ladite prise d'aspiration sont disjointes.

8. Ensemble de pompe selon l'une quelconque des revendications 3 à 5, **caractérisé en ce que** ladite chambre (28) et ladite prise d'aspiration (9) sont jointives.

9. Ensemble de pompe selon l'une quelconque des revendications 2 à 5, **caractérisé en ce que** ledit capteur (23) comprend une ampoule Reed, et **en ce que** lesdits moyens (21) pour solliciter ce capteur (23) comprennent un aimant.

## Claims

1. Pump assembly for pumping a liquid such as a windscreen-washing or headlight-washing liquid out of a reservoir (R), comprising a suction inlet (9) for said liquid and a float gauge (13) comprising a sensor (23) for detecting the level of said liquid, in said reservoir (R), said suction inlet (9) and said float (13) being grouped together in the same region of space in the reservoir, **characterized in that** said sensor (23) is situated inside a volume defined by said pump assembly.

2. Pump assembly according to claim 1, **characterized in that** said float (13) is mounted sliding on said suction inlet (9), a rod (19) extending more or less in the direction of movement of said float being fixed on the latter and comprising, at its end, means (21) capable of attracting said sensor (23).

3. Pump assembly according to claim 1, **characterized in that** it comprises a chamber (28) extending in a direction more or less parallel to said suction inlet (9) and containing said sensor (23), means (21) capable of attracting this sensor (23) being fixed on said float (13).

4. Pump assembly according to claim 3, **characterized in that** said float (13) is mounted sliding both on said chamber (28) and on said suction inlet (9).

5. Pump assembly according to claim 3, **characterized in that** said float (13) is mounted rotating on said chamber (28).

6. Pump assembly according to claim 5, **characterized in that** said chamber (28) and said suction inlet (9) are bent.

7. Pump assembly according to any one of claims 3 to 5, **characterized in that** said chamber (28) and said suction inlet (9) are non-contiguous.

8. Pump assembly according to any one of claims 3 to 5, **characterized in that** said chamber (28) and said suction inlet (9) are contiguous.

9. Pump assembly according to any one of claims 2 to 5, **characterized in that** said sensor (23) comprises a Reed switch, and **in that** said means (21) for attracting this sensor (23) comprise a magnet.

## Patentansprüche

1. Pumpeneinheit zum Pumpen einer Flüssigkeit wie etwa einer Scheibenwaschoder Scheinwerferwaschflüssigkeit aus einem Reservoir (R), mit einer SaugÖffnung! 9 für die Flüssigkeit und einem Vonratsanrxiger mit einem Schwimmer (13), welcher einen Aufnehmer (13) umfasst, um die Höhe der Flüssigkeit in dem Reservoir (R) zu erfassen, wobei die Saugöffnung (9) und der Schwimmer (13) in einem selben Bereich des Raums in dem Reservoir angeordnet sind, **dadurch gekennzeichnet, dass** der Aufnehmer (23) im Inneren des von der Pumpeneinheit vorgegebenen Volumenraums angeordnet ist.

2. Pumpen,einheit nach Anspruch 1, **dadurch gekennzeichnet, dass** der Schwimmer (13) auf der Saugöffnung (9) gleitend befestigt wird, wobei ein sich im Wesentlichen folgend der Richtung der Verschiebung des Schwimmers erstreckendervStab (19) an letzterem befestigt ist und an seinem Ende Mittel (21) aufweist, die geeignet sind, den Aufnehmer (23) zu belasten.

3. Pumpeneinheit nach Anspruch 1, **dadurch gekennzeichnet, dass** sie eine Kammer (28) umfasst, die sich folgend einer Richtung erstreckt, die im Wesentlichen parallel zur Saugöffnung (9) ist und den Aufnehmer (23) enthält, wobei Mittel (21), die geeignet sind, diesen Aufnehmer (23) zu belasten, auf dem Schwimmer (13) befestigt sind.

4. Pumpeneinheit nach Anspruch 3, **dadurch gekennzeichnet, dass** der Schwimmer (13) gleichzeitig auf der Kammer (28) und auf der Saugöffnung (9) gleitend befestigt ist.

5. Pumpeneinheit nach Anspruch 3, **dadurch gekennzeichnet, dass** der Schwimmer (13) auf der Kammer (28) drehbar befestigt ist.

6. Pumpeneinheit nach Anspruch 5, **dadurch gekennzeichnet, dass** die Kammer (28) und die Saugöffnung (9) gekrümmt sind.

7. Pumpeneinheit nach einem der Ansprüche 3 bis 5, **dadurch gekennzeichnet, dass** die Kammer (28) und die Saugöffnung voneinander getrennt sind.

8. Pumpeneinheit nach einem der Ansprüche 3 bis 5, **dadurch gekennzeichnet, dass** die Kammer (28) und die Saugöffnung (9) aneinander anstoßend sind.

9. Pumpeneinheit nach einem der Ansprüche 2 bis 5, **dadurch gekennzeichnet, dass** der Aufnehmer (23) einen Reed-Kolben umfasst, und dass die Mittel (21) zum Belasten dieses Aufnehmers (23) einen Magnet umfassen.
